# EUROPÄISCHE PATENTSCHRIFT

(11) **EP 4 108 568 B1**
(45) Veröffentlichungstag und Bekanntmachung des Hinweises auf die Patenterteilung: **04.09.2024**
(21) Anmeldenummer: 21181768.9
(22) Anmeldetag: 25.06.2021
(51) Int. Cl.: B64D 11/00

(54) **FLUGBEGLEITERRUFEINRICHTUNG, SYSTEM UND VERFAHREN ZUM KONFIGURIEREN EINER FLUGBEGLEITERRUFEINRICHTUNG**
STEWARD CALL DEVICE, SYSTEM AND METHOD FOR CONFIGURING A STEWARD CALL DEVICE
DISPOSITIF D'APPEL DE L'ÉQUIPAGE DE CABINE, SYSTÈME ET PROCÉDÉ DE CONFIGURATION D'UN DISPOSITIF D'APPEL DE L'ÉQUIPAGE DE CABINE

(43) Veröffentlichungstag der Anmeldung: 28.12.2022
(73) Patentinhaber: Airbus Operations GmbH, 21129 Hamburg (DE)
(72) Erfinder: LÜDTKE, Michael, 21129 Hamburg (DE); NETZLER, Michael, 21129 Hamburg (DE)
(74) Vertreter: Isarpatent

(56) Entgegenhaltungen:
- US-A1- 2010 217 458
- US-A1- 2021 061 471

## Beschreibung

### TECHNISCHES GEBIET DER ERFINDUNG

Die Erfindung betrifft eine Flugbegleiterrufeinrichtung für den Einsatz in Passagierkabinen von Passagierflugzeugen, sowie ein System und ein Verfahren zum Konfigurieren einer Flugbegleiterrufeinrichtung.

### TECHNISCHER HINTERGRUND

Passagierserviceeinheiten ("passenger service units", PSUs) an Bord von Passagierflugzeugen umfassen häufig einem spezifischen Passagiersitz zugeordnete Druckknöpfe oder andere statische Bedienelemente, die dazu dienen, es einem Passagier zu ermöglichen, ein Anforderungssignal an ein Mitglied der Flugzeugbordbesatzung zu senden, sogenannte Flugbegleiterrufeinrichtungen. Solche Anforderungssignale geben den Besatzungsmitgliedern lediglich Aufschluss über die Lokalisierung des zugeordneten Passagiersitzes, aber nicht über den jeweiligen Begehr des Passagiers. Flugbegleiter können nach Erhalt des Anforderungssignals zu dem Passagiersitz gehen, den Passagier nach seinen Wünschen befragen und danach entsprechend handeln, wie beispielsweise ein Kissen holen, ein Getränk servieren oder einen Kaufvorgang aus dem Bordshop initiieren.

Die Druckschrift US 2021/0061471 A1 offenbart Verfahren und System zur prädiktiven Präferenzauswahl für On-Board-Entertainmentsysteme in Passagierflugzeugen. Die Druckschrift US 9,245,303 B2 offenbart konfigurierbare On-Board-Entertainmentsysteme in Passagierflugzeugen. Die Druckschrift US 2010/217458 A1 offenbart ein interaktives Informationssystem für ein Flugzeug, um Passagieren Informationen bereitzustellen, die sowohl auf einen bordeigenen Datenspeicher als auch auf einen bordexternen Datenspeicher zugreifen. Ein Computer errechnet aus den Onboard- und Offboard-Daten aussagekräftige Daten, die dann dem Passagier visualisiert werden. Form und Art der Datenerstellung und -aufbereitung kann der Fahrgast jederzeit interaktiv bestimmen.

### ZUSAMMENFASSUNG DER ERFINDUNG

Eine der Aufgaben der Erfindung besteht darin, Lösungen für Flugbegleiterrufeinrichtungen zu finden, bei denen flexibler und effizienter nach Passagieren differenziert werden kann.

Diese und andere Aufgaben werden durch eine Flugbegleiterrufeinrichtung mit den Merkmalen des Anspruchs 1, ein System mit den Merkmalen des Anspruchs 5 sowie ein Verfahren zum Konfigurieren einer Flugbegleiterrufeinrichtung mit den Merkmalen des Anspruchs 9 gelöst.

Optionale Ausführungsformen werden durch die abhängigen Ansprüche definiert.

Eine wesentliche Idee der Erfindung besteht darin, eine Flugbegleiterrufeinrichtung je nach Passagier und dessen bzw. deren persönlicher Präferenzen dynamisch vor Flugantritt konfigurieren zu können, um es dem Passagier damit zu ermöglichen, den Flugbegleitern gezielte und bedarfsorientierte Wünsche an Bord des Flugzeugs übermitteln zu können. Dabei soll die Handhabung der Flugbegleiterrufeinrichtung für den Passagier so intuitiv wie möglich sein, weswegen eine anonymisierte und auf expliziten Passagierwunsch auch personalisierte Interaktionshistorie genutzt wird, so dass Bedienelemente für einen Passagier bezogen auf eine softwaregestützte Auswertung mittels selbstlernender Algorithmen.

Vorteilhafterweise können solche Flugbegleiterrufeinrichtungen in einer Passagierkabine eines Passagierflugzeugs eingesetzt werden, um die Servicebedingungen für jeden einzelnen Passagier flexibel individualisieren zu können.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen der erfindungsgemäßen Flugbegleiterrufeinrichtung und des erfindungsgemäßen Systems kann das mindestens eine Rufeinrichtungsbedienelement eine Sensorfläche oder einen Näherungssensor aufweisen.

Gemäß einiger alternativer Ausführungsformen der erfindungsgemäßen Flugbegleiterrufeinrichtung und des erfindungsgemäßen Systems kann das mindestens eine Rufeinrichtungsbedienelement eine Schaltfläche einer graphischen Nutzerschnittstelle eines Displays aufweisen. Dabei kann das mindestens eine Rufeinrichtungsbedienelement in manchen Ausführungsvarianten ein Softwaremodul eines Onboard-Entertainment-Endgerätes des Passagierflugzeugs sein.

Gemäß einiger weiterer Ausführungsformen der erfindungsgemäßen Flugbegleiterrufeinrichtung und des erfindungsgemäßen Systems kann der Rufeinrichtungsprozessor weiterhin dazu ausgelegt sein, Bedienvorgänge des mindestens einen Rufeinrichtungsbedienelements durch den dem Sitz zugeordneten Passagier nachzuverfolgen und an einen Flugzeugserver des Passagierflugzeugs zur Erstellung eines Passagierpräferenzprofils weiterzuleiten.

Gemäß einiger Ausführungsformen des erfindungsgemäßen Systems kann der Fluglinienserver weiterhin dazu ausgelegt sein, die Vielzahl von Passagierpräferenzprofilen mithilfe selbstlernender Algorithmen auf der Basis wahrscheinlicher Passagierpräferenzen zu erstellen, die auf Passagierpräferenzen vergangener Flüge der jeweiligen Passagiere beruhen. In manchen dieser Ausführungsformen kann der Fluglinienserver weiterhin dazu ausgelegt sein, die Vielzahl von Passagierpräferenzprofilen zusätzlich auf der Basis von in dem mindestens einem mit dem Fluglinienserver gekoppelten Datenspeicher abgespeicherten Informationen zu Flugrouten, Wetterlagen, Jahreszeiten, Reisezwecken, Gesundheitsinformationen, aktuellen Nachrichten, Dienstverfügbarkeiten, Warenverfügbarkeiten und/oder Persönlichkeitsinformationen der Passagiere zu erstellen.

Gemäß einiger Ausführungsformen des erfindungsgemäßen Systems kann das Flugzeugnetzwerk weiterhin einen Kabinennetzwerkzugriffspunkt aufweisen, über welchen Passagiere mobile Endgeräte mit einem Kabinennetzwerk verbinden können. In manchen Ausführungsvarianten kann der Flugzeugserver weiterhin dazu ausgelegt sein, ein Steuersignal an die mobilen Endgeräte zur Anzeige eines gemäß eines jeweiligen der Vielzahl von Passagierpräferenzprofilen angepassten Bedienelementes über eine graphische Nutzerschnittstelle des mobilen Endgerätes zu übermitteln. Gemäß einiger Ausführungsformen des erfindungsgemäßen Verfahrens kann das Erstellen der Vielzahl von Passagierpräferenzprofilen mithilfe selbstlernender Algorithmen auf der Basis wahrscheinlicher Passagierpräferenzen erfolgen, die auf Passagierpräferenzen vergangener Flüge der jeweiligen Passagiere beruhen. Dabei kann in manchen Ausführungsvarianten das Erstellen der Vielzahl von Passagierpräferenzprofilen zusätzlich auf der Basis von Informationen zu Flugrouten, Wetterlagen, Jahreszeiten, Reisezwecken, Gesundheitsinformationen, aktuellen Nachrichten, Dienstverfügbarkeiten, Warenverfügbarkeiten und/oder Persönlichkeitsinformationen der Passagiere, erfolgen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 ein schematisches Blockschaubild eines Systems zum Konfigurieren einer Flugbegleiterrufeinrichtung für ein Passagierflugzeug gemäß einer Ausführungsform der Erfindung;
Fig. 2 eine schematische Illustration eines Flugzeugs mit einer konfigurierbaren Flugbegleiterrufeinrichtung gemäß einer weiteren Ausführungsform der Erfindung; und
Fig. 3 ein schematisches Flussablaufdiagramm der Schritte eines Verfahrens zum Konfigurieren einer Flugbegleiterrufeinrichtung für ein Passagierflugzeug gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

In der folgenden Beschreibung wird auf selbstlernende Algorithmen Bezug genommen, welche in einem System künstlicher Intelligenz (KI-System) genutzt werden. Allgemein gesprochen, bildet ein selbstlernender Algorithmus kognitive Funktionen nach, die nach menschlichem Ermessen einer menschlichen Denkleistung zugeordnet werden. Dabei kann der selbstlernende Algorithmus durch Hinzunahme neuer Trainingsinformationen die bislang aus alten Trainingsinformationen gewonnenen Erkenntnisse dynamisch an die veränderten Umstände anpassen, um in der Gesamtheit der Trainingsinformationen Muster und Gesetzmäßigkeiten zu erkennen und zu extrapolieren.

In selbstlernenden Algorithmen im Sinne der vorliegenden Erfindung können alle Arten des den menschlichen Erkenntnisgewinn bildenden Trainings verwendet werden, wie beispielsweise überwachtes Lernen, teil-überwachtes Lernen, selbständiges Lernen auf der Basis generativer, nicht-generativer oder tiefer kontradiktorischer Netzwerke ("adversarial networks", AN), bestärkendes Lernen oder aktives Lernen. Dabei kann in jeder Instanz merkmalsbasiertes Lernen ("representation learning") eingesetzt werden. Die selbstlernenden Algorithmen im Sinne der vorliegenden Erfindung können insbesondere eine iterative Anpassung von zu lernenden Parametern und Merkmalen über rückkoppelnde Analyse vornehmen.

Ein selbstlernender Algorithmus im Sinne der vorliegenden Erfindung kann auf einem Stützvektorklassifikator ("support vector network", SVN), einem neuronalen Netzwerk wie etwa ein faltendes neuronales Netzwerk ("convolutional neural network", CNN), ein Kohonen-Netz, ein rekurrentes neuronales Netzwerk, ein zeitverzögerndes neuronales Netzwerk ("time-delayed neural network", TDNN) oder ein oszillierendes neronales Netzwerk ("oscillatory neural network", ONN) , einem Random-Forest-Klassifikator, einem Entscheidungsbaum-Klassifikator, einem Monte-Carlo-Netzwerk oder einem Bayes'schen Klassifikator aufbauen. Dabei kann ein selbstlernender Algorithmus im Sinne der vorliegenden Erfindung eigenschaftshereditäre

Algorithmen, k-Means-Algorithmen wie etwa Lloyd- oder MacQueen's-Algorithmen oder TD-Lernalgorithmen wie etwa SARSA oder Q-Learning einsetzen.

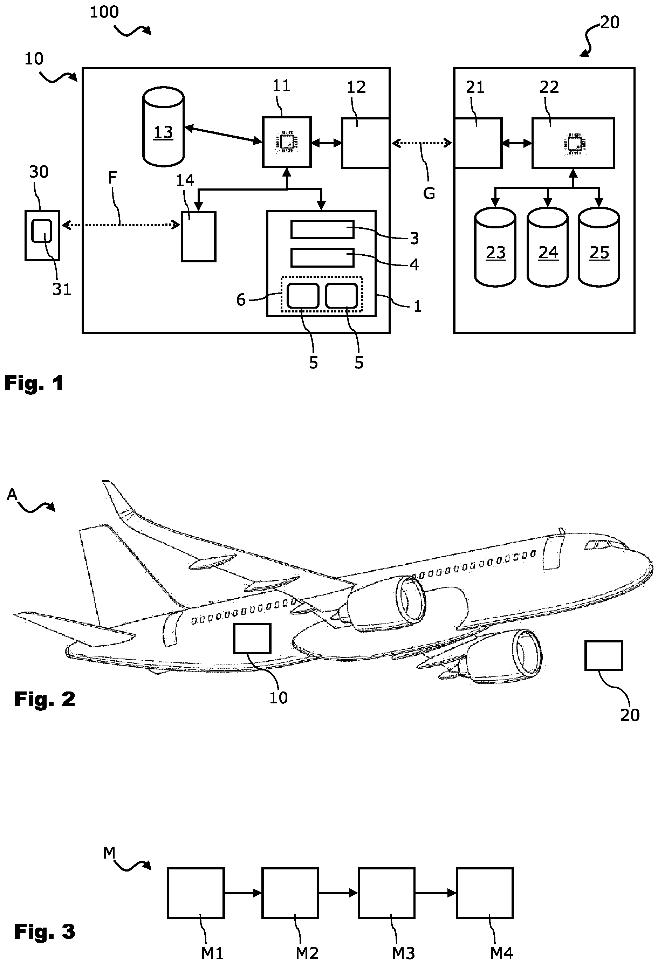

Fig. 1 zeigt ein schematisches Blockschaubild eines Systems 100 zum Konfigurieren einer Flugbegleiterrufeinrichtung 1 für ein Passagierflugzeug. Insbesondere kann das System im Zusammenhang mit dem in Fig. 2 schematisch illustrierten Passagierflugzeug A eingesetzt werden.

Das System 100 weist einen in einem Flugzeug - wie etwa dem Flugzeug Ader Fig. 2 - integrierten Anteil mit einem Flugzeugnetzwerk 10 und einen extern - wie etwa in den Betriebsräumen einer Airline - untergebrachten Anteil mit einem bodengebundenen Flugliniennetzwerk 20 auf. Das Flugzeugnetzwerk 10 weist einen Flugzeugserver 11, einem mit dem Flugzeugserver 11 gekoppelten Datenspeicher 13, und einem Flugzeugkommunikationsmodul 12 auf. Das bodengebundene Flugliniennetzwerk 20 umfasst einen Fluglinienserver 22, mehrere mit dem Fluglinienserver 22 gekoppelte Datenspeicher 23, 24 bzw. 25 für verschiedene Datenquellen und ein Bodenkommunikationsmodul 21. Über das Bodenkommunikationsmodul 21 und das Flugzeugkommunikationsmodul 12 kann zwischen dem bodengebundenen Flugliniennetzwerk 20 und dem Flugzeugnetzwerk 10 eine Kommunikationsverbindung G aufrechterhalten werden, mittels derer Daten zwischen den beiden Netzwerken 10 und 20 ausgetauscht werden können. Die Kommunikationsmodule 21 und 12 können beispielweise Funkkommunikationsmodule oder auch drahtgebundene Kommunikationsmodule wie etwa USB-Schnittstellen sein.

Im Flugzeug A befinden sich ein oder mehrere Flugbegleiterrufeinrichtungen 1.

Solche Flugbegleiterrufeinrichtungen 1 weisen eine Passagier-Serviceeinheit 6 auf. Es kann jedoch auch möglich sein, dass die Flugbegleiterrufeinrichtungen 1 Onboard-Entertainment-Endgeräte 6 an Bord des Flugzeugs 1 sind. Die Flugbegleiterrufeinrichtungen 1 weisen jeweils mindestens ein einem Sitz des Passagierflugzeugs A zugeordnetes Rufeinrichtungsbedienelement 5 zur Anforderung von Flugbegleiterpersonal an Bord des Passagierflugzeugs A auf. Die Rufeinrichtungsbedienelemente 5 werden in einer Passagier-Serviceeinhait 6 als mindestens ein physischer Knopf, ein physischer Drehknopf, ein physischer Schalter oder ein physischer Taster ausgestaltet. Die Rufeinrichtungsbedienelemente 5 können dabei beispielsweise in einer Passagier-Serviceeinheit 6 als Sensorfläche oder Näherungssensor ausgestaltet werden. Es kann allerdings auch möglich sein, Rufeinrichtungsbedienelemente 5 als Schaltflächen einer graphischen Nutzerschnittstelle eines Displays eines bordgebundenen Endgerätes, wie etwa eines Tablets oder eines Rückenlehnenmonitors mit Berührfunktionalität auszugestalten.

Ein für die Dauer eines Fluges auf einem Sitz gebuchter Passagier kann die Rufeinrichtungsbedienelemente 5 nutzen, um dem Flugbegleiterpersonal einen Servicewunsch mitzuteilen. Dabei sind die Rufeinrichtungsbedienelemente 5 dynamisch konfigurierbar, um den jeweiligen Servicewunschpräferenzen des jeweiligen Passagiers während der Dauer des Flugs Rechnung zu tragen.

Zu diesem Zweck weist die Flugbegleiterrufeinrichtung 1 einen Rufeinrichtungsprozessor 3 auf. Der Rufeinrichtungsprozessor 3 kann ein Konfigurationsprofil des mindestens einen Rufeinrichtungsbedienelements 5 auf der Basis von Passagierpräferenzen des jeweils momentan den Sitz belegenden Passagiers erstellen. Hierzu kann der Rufeinrichtungsprozessor 3 von dem Flugzeugserver 11 aus dem Profilspeicher 13 ein jeweils für den Passagier passendes Passagierpräferenzprofil übertragen bekommen.

Die Passagierpräferenzprofile weisen Informationen darüber auf, welche Servicewünsche ein Passagier unter bestimmten Flugrandbedingungen in der Vergangenheit überwiegend geäußert hat und an welchen Servicewünschen ein Passagier für den aktuellen Flug mit hoher Wahrscheinlichkeit Bedarf haben wird. Die Passagierpräferenzprofile können im bodengebundenen Flugliniennetzwerk 20 durch den Fluglinienserver 22 erstellt werden. Der Fluglinienserver 22 kann dazu neben den historischen Passagierpräferenzen auf ähnlichen Flügen auf verschiedene Datenquellen externer Informationen zurückgreifen. Beispielsweise können die Vielzahl von Passagierpräferenzprofilen auf der Basis von in verschiedenen der Datenspeicher 23, 24 bzw. 25 abgespeicherten Informationen zu Flugrouten, Wetterlagen, Jahreszeiten, Reisezwecken, Gesundheitsinformationen, aktuellen Nachrichten, Dienstverfügbarkeiten, Warenverfügbarkeiten und/oder Persönlichkeitsinformationen der Passagiere erstellt werden.

Der Fluglinienserver kann zur Erstellung der Vielzahl von Passagierpräferenzprofilen selbstlernende Algorithmen einsetzen, um basierend auf Passagierpräferenzen vergangener Flüge der jeweiligen Passagiere, und gegebenenfalls unter Berücksichtigung von weiteren Randbedingungen des aktuellen Fluges Vorhersagen zu wahrscheinlichen Passagierpräferenzen zu treffen. Dabei können durch den Rufeinrichtungsprozessor 3 der Flugbegleiterrufeinrichtungen 1 jeweils Bedienvorgänge der Rufeinrichtungsbedienelemente 5 passagierbezogen und in zeitlicher Abfolge nachverfolgt werden. Die Historie der Bedienvorgänge der Rufeinrichtungsbedienelemente 5 kann dann an den Flugzeugserver 11 weitergeleitet werden und bei der Erstellung des dem Passagier zugeordneten Passagierpräferenzprofil genutzt werden.

Das Konfigurationsprofil des Rufeinrichtungsprozessor 3 kann in den Flugbegleiterrufeinrichtungen 1 durch einen nachgeschalteten Bedienelementkonfigurator 4 verwendet werden, um auf der Basis des jeweils aktuellen Konfigurationsprofils ein optisches und/oder haptisches Erscheinungsbild sowie eine Flugbegleiterruffunktionalität des mindestens einen Rufeinrichtungsbedienelements 5 einzustellen. Beispielweise kann es im Falle von Sensorflächen möglich sein, eine Hintergrundbeleuchtung der Sensorfläche in Farbe, Symbolik und/oder Helligkeit anzupassen, um dem Passagier zu signalisieren, welche Flugbegleiterruffunktionalität einer Betätigung des Rufeinrichtungsbedienelements 5 derzeit zugeordnet ist.

Zum Beispiel kann der Bedienelementkonfigurator 4 als im Konfigurationsprofil abgebildeten präferierten Servicewunsch das Anfordern einer Decke oder den Bestellvorgang eines bestimmten Produktes aus dem Bordshop an Bord des Flugzeugs voreinstellen. Hierzu kann der Bedienelementkonfigurator 4 bei einem (nicht explizit gezeigten) Crewpanel die Anzeige des im Konfigurationsprofil abgebildeten präferierten Servicewunsch mit einer Betätigung des Rufeinrichtungsbedienelements 5 an dem jeweils zugeordneten Sitz verknüpfen. Auf diese Weise kann der Passagier einen von ihm wahrscheinlich präferierten Servicewunsch bereits durch eine reine Betätigung des Rufeinrichtungsbedienelements 5 gegenüber dem Flugbegleiterpersonal äußern, ohne dass es eines unspezifischen Anforderungssignals gegenüber der Crew bedarf, aufgrund dessen ein Flugbegleiter zum Platz des Passagiers kommen müsste, um sich nach dem spezifischen Servicewunsch zu erkundigen. Dadurch können unnötige Wegstrecken des Flugbegleiterpersonals vermieden und der Passagierkomfort gesteigert werden.

Wie in Fig. 1 gezeigt, können nicht nur im Flugzeug integrierte Flugbegleiterrufeinrichtungen 1 zur Konfigurierung von Bedienelementen genutzt werden. Es kann auch möglich sein, dass das Flugzeugnetzwerk 10 einen beispielsweise drahtlosen, funkgebundenen Kabinennetzwerkzugriffspunkt 14 aufweist, über welchen Passagiere mobile Endgeräte 30 wie etwa Tablets, PDAs, Notebooks, Smartphones oder andere persönliche elektronische Geräte mit einem Kabinennetzwerk mittels einer Funkverbindung F verbinden können. Der Flugzeugserver 11 kann gemäß den Passagierpräferenzprofilen mobile Endgeräte 30 zugeordneter Passagiere ermitteln, und Steuersignale an die mobilen Endgeräte 30 schicken, die es einer passenden Software auf den mobilen Endgeräten 30 - wie etwa einer App einer Fluglinie - ermöglichen, eines oder mehrere gemäß einem jeweiligen Passagierpräferenzprofil angepasste Bedienelemente 31 über eine graphische Nutzerschnittstelle des mobilen Endgerätes 30 anzuzeigen. Der Passagier kann dann durch Aktivierung des Bedienelementes 31 auf der graphischen Nutzeroberfläche ein Servicewunschsignal über die Funkverbindung an den Kabinennetzwerkzugriffspunkt 14 und in Folge an ein Crewpanel zu übermitteln.

Fig. 3 zeigt ein schematisches Flussdiagramm von Verfahrensschritten eines Verfahrens M zum Konfigurieren eines Flugbegleiterrufeinrichtung 1 in einem Passagierflugzeug. Das Verfahren M kann beispielsweise in einem Passagierflugzeug A wie in Fig. 2 beispielhaft dargestellt eingesetzt werden. Dazu kann das Verfahren M auf das System 100 der Fig. 1 und deren Systemkomponenten zurückgreifen.

Zunächst erstellt in Schritt M1 ein Fluglinienserver 22 eines bodengebundenen Flugliniennetzwerks 20 eine Vielzahl von Passagierpräferenzprofilen für eine Vielzahl von Passagieren auf der Basis von Passagierpräferenzen der jeweiligen Passagiere. Dieses Erstellen kann beispielsweise mithilfe selbstlernender Algorithmen auf der Basis wahrscheinlicher Passagierpräferenzen, die auf Passagierpräferenzen vergangener Flüge der jeweiligen Passagiere beruhen, erfolgen. Zusätzlich dazu können Informationen zu Flugrouten, Wetterlagen, Jahreszeiten, Reisezwecken, Gesundheitsinformationen, aktuellen Nachrichten, Dienstverfügbarkeiten, Warenverfügbarkeiten und/oder Persönlichkeitsinformationen der Passagiere bei der Erstellung der Passagierpräferenzprofile mit berücksichtigt werden.

Die Passagierpräferenzprofile werden in Schritt M2 durch den Fluglinienserver 22 an einen Flugzeugserver 11 eines Flugzeugnetzwerks 10 übermittelt, der die Passagierpräferenzprofile in einem Profilspeicher 13 an Bord eines Flugzeugs speichern kann. Durch jeweilige Flugbegleiterrufeinrichtungen 1, die unterschiedlichen Sitzen des Passagierflugzeugs A zugeordnet sind, kann in einem Rufeinrichtungsprozessor 3 in einem Schritt M3 eine Vielzahl von Konfigurationsprofilen verschiedener Rufeinrichtungsbedienelemente 5 erstellt werden. Diese Konfigurationsprofile berücksichtigen die entsprechenden vorausgesagten oder historischen Servicewunschpräferenzen des für den aktuellen Flug dem jeweiligen Sitz zugeordneten Passagiers.

Mithilfe der Konfigurationsprofile können in Schritt M4 die optischen und/oder haptischen Erscheinungsbilder sowie die zugehörige Flugbegleiterruffunktionalität der unterschiedlichen Rufeinrichtungsbedienelemente 5 auf der Basis des jeweils passagierbezogen erstellten Konfigurationsprofils konfiguriert werden. Beispielsweise können Knöpfe, Drehknöpfe, Schalter, Taster, Sensorflächen und/oder Näherungssensoren mit je nach Sitz verschiedenen Servicewünschen versehen werden, so dass ein Passagier an seiner ihm zugeordneten Passagier-Serviceeinheit 6 auf ihn zugeschnittene Vorschläge für spezifische Servicewünsche auf einfache Betätigung des konfigurierten Rufeinrichtungsbedienelements 5 vorfinden kann.

## Patentansprüche

1. Flugbegleiterrufeinrichtung (1) für ein Passagierflugzeug (A), umfassend:
mindestens ein Rufeinrichtungsbedienelement (5), das dazu eingerichtet ist, einem Sitz des Passagierflugzeugs (A) zugeordnet zu werden, zur Anforderung von Flugbegleiterpersonal an Bord des Passagierflugzeugs (A) durch einen dem Sitz zugeordneten Passagier;
einen Rufeinrichtungsprozessor (3), welcher dazu ausgelegt ist, ein Konfigurationsprofil des mindestens einen Rufeinrichtungsbedienelements (5) auf der Basis von Passagierpräferenzen des dem Sitz zugeordneten Passagiers des Passagierflugzeugs (A) zu erstellen; und
einen Bedienelementkonfigurator (4), welcher mit dem Rufeinrichtungsprozessor (3) gekoppelt ist, und welcher dazu ausgelegt ist, auf der Basis des von dem Rufeinrichtungsprozessor (3) empfangenen Konfigurationsprofils ein optisches und/oder haptisches Erscheinungsbild sowie eine Flugbegleiterruffunktionalität des mindestens einen Rufeinrichtungsbedienelements (5) einzustellen;
wobei das mindestens eine Rufeinrichtungsbedienelement (5) einen physischen Knopf, einen physischen Drehknopf, einen physischen Schalter oder einen physischen Taster aufweist; und
eine Passagier-Serviceeinheit (6);
wobei das mindestens eine Rufeinrichtungsbedienelement (5) Teil der Passagier-Serviceeinheit (6) ist.

2. Flugbegleiterrufeinrichtung (1) gemäß Anspruch 1, wobei das mindestens eine Rufeinrichtungsbedienelement (5) eine Sensorfläche oder einen Näherungssensor aufweist.

3. Flugbegleiterrufeinrichtung (1) gemäß Anspruch 1, wobei das mindestens eine Rufeinrichtungsbedienelement (5) eine Schaltfläche einer graphischen Nutzerschnittstelle eines Displays aufweist, und wobei das mindestens eine Rufeinrichtungsbedienelement (5) ein Softwaremodul eines Onboard-Entertainment-Endgerätes (6) des Passagierflugzeugs (A) ist.

4. Flugbegleiterrufeinrichtung (1) gemäß einem der Ansprüche 1 bis 3, wobei der Rufeinrichtungsprozessor (3) weiterhin dazu ausgelegt ist, Bedienvorgänge des mindestens einen Rufeinrichtungsbedienelements (5) durch den dem Sitz zugeordneten Passagier nachzuverfolgen und an einen Flugzeugserver (11) des Passagierflugzeugs (A) zur Erstellung eines Passagierpräferenzprofils weiterzuleiten.

5. System (100) zum Konfigurieren eines Flugbegleiterrufeinrichtung (1), umfassend:
mindestens eine Flugbegleiterrufeinrichtung (1) gemäß einem der Ansprüche 1 bis 4;
ein Flugzeugnetzwerk (10) mit einem Flugzeugserver (11), einem mit dem Flugzeugserver (11) gekoppelten Datenspeicher (13), und einem Flugzeugkommunikationsmodul (12), wobei der Flugzeugserver (11) dazu ausgelegt ist, eine Vielzahl von Passagierpräferenzprofilen in dem Datenspeicher (13) abzulegen; und
ein bodengebundenes Flugliniennetzwerk (20) mit einem Fluglinienserver (22), mindestens einem mit dem Fluglinienserver (22) gekoppelten Datenspeicher (23; 24; 25), und einem Bodenkommunikationsmodul (21), wobei der Fluglinienserver (22) dazu ausgelegt ist, auf der Basis von Passagierpräferenzen einer Vielzahl von Passagieren die Vielzahl von Passagierpräferenzprofilen zu erstellen und über eine Datenverbindung (G) zwischen dem Bodenkommunikationsmodul (21) und dem Flugzeugkommunikationsmodul (12) an den Flugzeugserver (11) zu übertragen.

6. System (100) gemäß Anspruch 5, wobei der Fluglinienserver (22) weiterhin dazu ausgelegt ist, die Vielzahl von Passagierpräferenzprofilen mithilfe selbstlernender Algorithmen auf der Basis wahrscheinlicher Passagierpräferenzen zu erstellen, die auf Passagierpräferenzen vergangener Flüge der jeweiligen Passagiere beruhen.

7. System (100) gemäß Anspruch 6, wobei der Fluglinienserver (22) weiterhin dazu ausgelegt ist, die Vielzahl von Passagierpräferenzprofilen zusätzlich auf der Basis von in dem mindestens einem mit dem Fluglinienserver (22) gekoppelten Datenspeicher (23; 24; 25) abgespeicherten Informationen zu Flugrouten, Wetterlagen, Jahreszeiten, Reisezwecken, Gesundheitsinformationen, aktuellen Nachrichten, Dienstverfügbarkeiten, Warenverfügbarkeiten und/oder Persönlichkeitsinformationen der Passagiere zu erstellen.

8. System (100) gemäß einem der Ansprüche 5 bis 7, wobei das Flugzeugnetzwerk (10) weiterhin einen Kabinennetzwerkzugriffspunkt (14) aufweist, über welchen Passagiere mobile Endgeräte (30) mit einem Kabinennetzwerk verbinden können, und wobei der Flugzeugserver (11) weiterhin dazu ausgelegt ist, ein Steuersignal an die mobilen Endgeräte (30) zur Anzeige eines gemäß eines jeweiligen der Vielzahl von Passagierpräferenzprofilen angepassten Bedienelementes (31) über eine graphische Nutzerschnittstelle des mobilen Endgerätes (30) zu übermitteln.

9. Verfahren (M) zum Konfigurieren eines Flugbegleiterrufeinrichtung (1) in einem Passagierflugzeug (A), umfassend:
Erstellen (M1), durch einen Fluglinienserver (22) eines bodengebundenen Flugliniennetzwerks (20), einer Vielzahl von Passagierpräferenzprofilen für eine Vielzahl von Passagieren auf der Basis von Passagierpräferenzen der jeweiligen Passagiere;
Übermitteln (M2) der Vielzahl von Passagierpräferenzprofilen durch den Fluglinienserver (22) an einen Flugzeugserver (11) eines Flugzeugnetzwerks (10);
Erstellen (M3), durch einen Rufeinrichtungsprozessor (3) einer einem Sitz des Passagierflugzeugs (A) zugeordneten Flugbegleiterrufeinrichtung (1), eines Konfigurationsprofils eines Rufeinrichtungsbedienelements (5) der Flugbegleiterrufeinrichtung (1) auf der Basis eines dem Sitz des Passagierflugzeugs (A) zugeordneten Passagierpräferenzprofil; und
Konfigurieren (M4) eines optischen und/oder haptischen Erscheinungsbildes sowie einer Flugbegleiterruffunktionalität des Rufeinrichtungsbedienelements (5) auf der Basis des von dem Rufeinrichtungsprozessor (3) erstellten Konfigurationsprofils;
wobei das mindestens eine Rufeinrichtungsbedienelement (5) einen physischen Knopf, einen physischen Drehknopf, einen physischen Schalter oder einen physischen Taster aufweist; und
wobei das mindestens eine Rufeinrichtungsbedienelement (5) Teil einer Passagier-Serviceeinheit (6) der Flugbegleiterrufeinrichtung (1) ist.

10. Verfahren (M) gemäß Anspruch 9, wobei das mindestens eine Rufeinrichtungsbedienelement (5) eine Sensorfläche oder einen Näherungssensor aufweist.

11. Verfahren (M) gemäß einem der Ansprüche 9 und 10, wobei das Erstellen (M1) der Vielzahl von Passagierpräferenzprofilen mithilfe selbstlernender Algorithmen auf der Basis wahrscheinlicher Passagierpräferenzen, die auf Passagierpräferenzen vergangener Flüge der jeweiligen Passagiere beruhen, erfolgt.

12. Verfahren (M) gemäß Anspruch 11, wobei das Erstellen (M1) der Vielzahl von Passagierpräferenzprofilen zusätzlich auf der Basis von Informationen zu Flugrouten, Wetterlagen, Jahreszeiten, Reisezwecken, Gesundheitsinformationen, aktuellen Nachrichten, Dienstverfügbarkeiten, Warenverfügbarkeiten und/oder Persönlichkeitsinformationen der Passagiere erfolgt.

13. Flugzeug (A) mit einer Flugbegleiterrufeinrichtung (1) gemäß einem der Ansprüche 1 bis 4.

## Claims

1. Flight attendant calling device (1) for a passenger aircraft (A), comprising:
at least one calling device control element (5) set up to be assigned to a seat of the passenger aircraft (A) for calling flight attendant staff on board the passenger aircraft (A) by a passenger assigned to the seat;
a calling device processor (3), which is designed to create a configuration profile of the at least one calling device control element (5) based on passenger preferences of the passenger of the passenger aircraft (A) assigned to the seat; and
a control element configurator (4), which is coupled to the calling device processor (3), and which is designed to set a visual and/or haptic appearance as well as a flight attendant calling functionality of the at least one calling device control element (5) on the basis of the configuration profile received from the calling device processor (3);
wherein the at least one calling device control element (5) has a physical knob, a physical rotary knob, a physical switch or a physical button; and
a passenger service unit (6);
wherein the at least one calling device control element (5) is part of the passenger service unit (6).

2. Flight attendant calling device (1) according to Claim 1, wherein the at least one calling device control element (5) has a sensor surface or a proximity sensor.

3. Flight attendant calling device (1) according to Claim 1, wherein the at least one calling device control element (5) has a control button of a graphical user interface of a display, and wherein the at least one calling device control element (5) is a software module of an onboard entertainment terminal (6) of the passenger aircraft (A).

4. Flight attendant calling device (1) according to any of Claims 1 to 3, wherein the calling device processor (3) is further designed to track operating processes of the at least one calling device control element (5) by the passenger assigned to the seat and to forward them to an aircraft server (11) of the passenger aircraft (A) for the creation of a passenger preference profile.

5. System (100) for configuring a flight attendant calling device (1), comprising:
at least one flight attendant calling device (1) according to any of Claims 1 to 4;
an aircraft network (10) with an aircraft server (11), a data memory (13) coupled to the aircraft server (11), and
an aircraft communication module (12), wherein the aircraft server (11) is designed to store a plurality of passenger preference profiles in the data memory (13); and
a ground-based airline network (20) with an airline server (22), at least one data memory (23; 24; 25) coupled to the airline server (22), and a ground communication module (21), wherein the airline server (22) is designed to create the plurality of passenger preference profiles on the basis of passenger preferences of a plurality of passengers and to transfer them to the aircraft server (11) via a data connection (G) between the ground communication module (21) and the aircraft communication module (12).

6. System (100) according to Claim 5, wherein the airline server (22) is further designed to create the plurality of passenger preference profiles using self-learning algorithms based on probable passenger preferences which are based on passenger preferences of past flights of the respective passengers.

7. System (100) according to Claim 6, wherein the airline server (22) is further designed to additionally create the plurality of passenger preference profiles on the basis of information about flight routes, weather conditions, seasons, travel purposes, health information, current news, service availability, goods availability and/or personality information of the passengers stored in the at least one data memory (23; 24; 25) coupled to the airline server (22).

8. System (100) according to any of Claims 5 to 7, wherein the aircraft network (10) further has a cabin network access point (14) via which passengers can connect mobile terminals (30) to a cabin network, and wherein the aircraft server (11) is further designed to transmit a control signal to the mobile terminals (30) to display a control element (31) adapted according to a respective instance of the plurality of passenger preference profiles by means of a graphical user interface of the mobile terminal (30).

9. Method (M) for configuring a flight attendant calling device (1) in a passenger aircraft (A), comprising:
creating (M1), by means of an airline server (22) of a ground-based airline network (20), a plurality of passenger preference profiles for a plurality of passengers based on passenger preferences of the respective passengers;
transmitting (M2) the plurality of passenger preference profiles by the airline server (22) to an aircraft server (11) of an aircraft network (10);
creating (M3), by means of a calling device processor (3) of a flight attendant calling device (1) assigned to a seat of the passenger aircraft (A), a configuration profile of a calling device control element (5) of the flight attendant calling device (1) on the basis of a passenger preference profile assigned to the seat of the passenger aircraft (A); and
configuring (M4) a visual and/or haptic appearance and a flight attendant calling functionality of the calling device control element (5) based on the configuration profile created by the calling device processor (3);
wherein the at least one calling device control element (5) has a physical knob, a physical rotary knob, a physical switch or a physical button; and
wherein the at least one calling device control element (5) is part of a passenger service unit (6) of the flight attendant calling device (1).

10. Method (M) according to Claim 9, wherein the at least one calling device control element (5) has a sensor surface or a proximity sensor.

11. Method (M) according to either of Claims 9 and 10, wherein creating (M1) the plurality of passenger preference profiles is carried out using self-learning algorithms based on probable passenger preferences which are based on passenger preferences of past flights of the respective passengers.

12. Method (M) according to Claim 11, wherein creating (M1) the plurality of passenger preference profiles is additionally carried out based on information about flight routes, weather conditions, seasons, travel purposes, health information, current news, service availability, goods availability and/or personality information of the passengers.

13. Aircraft (A) comprising a flight attendant calling device (1) according to any of Claims 1 to 4.

## Revendications

1. Dispositif d'appel de personnel de cabine (1) pour un aéronef de passagers (A), comprenant :
au moins un élément de commande de dispositif d'appel (5), qui est conçu pour être associé à un siège de l'aéronef de passagers (A), pour une demande de personnel de cabine à bord de l'aéronef de passagers (A) par un passager associé au siège ;
un processeur de dispositif d'appel (3), lequel est conçu pour créer un profil de configuration de l'au moins un élément de commande de dispositif d'appel (5) sur la base des préférences de passager du passager de l'aéronef de passagers (A) associé au siège ; et
un configurateur d'élément de commande (4), lequel est couplé au processeur de dispositif d'appel (3) et lequel est conçu pour, sur la base du profil de configuration reçu de la part du processeur de dispositif d'appel (3), régler un aspect visuel et/ou haptique ainsi qu'une fonctionnalité d'appel de personnel de cabine de l'au moins un élément de commande de dispositif d'appel (5) ;
l'au moins un élément de commande de dispositif d'appel (5) possédant un bouton physique, un bouton rotatif physique, un commutateur physique ou un bouton-poussoir physique ; et
un bloc service passagers (6) ;
l'au moins un élément de commande de dispositif d'appel (5) faisant partie du bloc service passagers (6).

2. Dispositif d'appel de personnel de cabine (1) selon la revendication 1, l'au moins un élément de commande de dispositif d'appel (5) possédant une surface de détection ou un capteur de proximité.

3. Dispositif d'appel de personnel de cabine (1) selon la revendication 1, l'au moins un élément de commande de dispositif d'appel (5) possédant un bouton d'une interface utilisateur graphique d'un écran d'affichage, et l'au moins un élément de commande de dispositif d'appel (5) étant un module logiciel d'un terminal de divertissement embarqué (6) de l'aéronef de passagers (A) .

4. Dispositif d'appel de personnel de cabine (1) selon l'une des revendications 1 à 3, le processeur de dispositif d'appel (3) étant en outre conçu pour suivre les opérations de commande de l'au moins un élément de commande de dispositif d'appel (5) par le passager associé au siège et pour les transmettre à un serveur d'aéronef (11) de l'aéronef de passagers (A) afin d'établir un profil de préférences de passager.

5. Système (100) pour configurer un dispositif d'appel de personnel de cabine (1), comprenant :
au moins un dispositif d'appel de personnel de cabine (1) selon l'une des revendications 1 à 4 ;
un réseau d'aéronef (10) comprenant un serveur d'aéronef (11), une mémoire de données (13) couplée au serveur d'aéronef (11), et un module de communication d'aéronef (12), le serveur d'aéronef (11) étant conçu pour stocker une pluralité de profils de préférences de passager dans la mémoire de données (13) ; et
un réseau de compagnie aérienne (20) au sol comprenant un serveur de compagnie aérienne (22), au moins une mémoire de données (23 ; 24 ; 25) couplée au serveur de compagnie aérienne (22), et un module de communication au sol (21), le serveur de compagnie aérienne (22) étant conçu pour créer la pluralité de profils de préférences de passager sur la base des préférences de passager d'une pluralité de passagers et pour la transmettre au serveur d'aéronef (11) par le biais d'une liaison de données (G) entre le module de communication au sol (21) et le module de communication d'aéronef (12).

6. Système (100) selon la revendication 5, le serveur de compagnie aérienne (22) étant en outre conçu pour créer la pluralité de profils de préférences de passager à l'aide d'algorithmes d'auto-apprentissage sur la base des préférences probables de passager, lesquelles s'appuient sur les préférences de passager de vols passés des passagers respectifs.

7. Système (100) selon la revendication 6, le serveur de compagnie aérienne (22) étant en outre conçu pour créer la pluralité de profils de préférences de passager sur la base d'informations stockées dans l'au moins une mémoire de données (23 ; 24 ; 25) couplée au serveur de compagnie aérienne (22) concernant des itinéraires de vol, des conditions météorologiques, des saisons, des motifs de voyage, des informations de santé, des actualités, des disponibilités de service, des disponibilités de marchandises et/ou des informations de personnalité des passagers.

8. Système (100) selon l'une des revendications 5 à 7, le réseau d'aéronef (10) possédant en outre un point d'accès au réseau de cabine (14), par le biais duquel les passagers peuvent connecter des terminaux mobiles (30) à un réseau de cabine, et le serveur d'aéronef (11) étant en outre conçu pour transmettre un signal de commande aux terminaux mobiles (30) afin d'afficher un élément de commande (31) adapté selon l'un respectif de la pluralité de profils de préférences de passager par le biais d'une interface utilisateur graphique du terminal mobile (30).

9. Procédé (M) de configuration d'un dispositif d'appel de personnel de cabine (1) dans un aéronef de passagers (A), comprenant :
création (M1), par un serveur de compagnie aérienne (22) d'un réseau de compagnie aérienne (20) au sol, d'une pluralité de profils de préférences de passager pour une pluralité de passagers sur la base des préférences de passager des passagers respectifs ;
communication (M2) de la pluralité de profils de préférences de passager par le serveur de compagnie aérienne (22) à un serveur d'aéronef (11) d'un réseau d'aéronef (10) ;
création (M3), par un processeur de dispositif d'appel (3) d'un dispositif d'appel de personnel de cabine (1) associé à un siège de l'aéronef de passagers (A), d'un profil de configuration d'un élément de commande de dispositif d'appel (5) du dispositif d'appel de personnel de cabine (1) sur la base d'un profil de préférences de passager associé au siège de l'aéronef de passagers (A) ; et
configuration (M4) d'un aspect visuel et/ou haptique ainsi qu'une fonctionnalité d'appel de personnel de cabine de l'élément de commande de dispositif d'appel (5) sur la base du profil de configuration créé par le processeur de dispositif d'appel (3) ;
l'au moins un élément de commande de dispositif d'appel (5) possédant un bouton physique, un bouton rotatif physique, un commutateur physique ou un bouton-poussoir physique ; et
l'au moins un élément de commande de dispositif d'appel (5) faisant partie du bloc service passagers (6) du dispositif d'appel de personnel de cabine (1).

10. Procédé (M) selon la revendication 9, l'au moins un élément de commande de dispositif d'appel (5) possédant une surface de détection ou un capteur de proximité.

11. Procédé (M) selon l'une des revendications 9 et 10, la création (M1) de la pluralité de profils de préférences de passager étant effectuée à l'aide d'algorithmes d'auto-apprentissage sur la base de préférences probables de passager, lesquelles s'appuient sur les préférences de passager de vols passés des passagers respectifs.

12. Procédé (M) selon la revendication 11, la création (M1) de la pluralité de profils préférentiels de passagers s'effectuant en outre sur la base d'informations concernant des itinéraires de vol, des conditions météorologiques, des saisons, des motifs de voyage, des informations de santé, des actualités, des disponibilités de service, des disponibilités de marchandises et/ou des informations de personnalité des passagers.

13. Aéronef (A) comprenant un dispositif d'appel de personnel de cabine (1) selon l'une des revendications 1 à 4.
